# EUROPEAN PATENT APPLICATION

(11) **EP 4 250 502 A1**
(43) Date of publication of application: **27.09.2023**
(21) Application number: 23164058.2
(22) Date of filing: 24.03.2023
(51) Int. Cl.: H02G 1/10, F16L 1/12, H02G 3/04, E21B 17/01, H02G 9/02

(54) **SUBSEA CABLE CROSSING DEVICE**

(30) Priority: 24.03.2022 NL 2031394
(71) Applicant: Vos Prodect Innovations B.V., 7892 AL Klazienaveen (NL)
(72) Inventor: MEINEN, Warner, 7892 AL Klazienaveen (NL)
(74) Representative: EP&C

(57) **Abstract**

The present invention relates to a subsea cable crossing device to guide a crossing between subsea cables, comprising two or more cable sleeve elements, which are configured to be arranged end-to-end and to surround the cable along a longitudinal direction of the cable.

The device is characterized in that the subsea cable crossing device further comprises:
- one or more spacer elements, configured to be arranged at an outer perimeter of at least one of the cable sleeve elements and to project outwardly in a radial direction relative to the longitudinal cable direction, and
- one or more support elements, configured to be associated with the spacer elements at an outer edge of the spacer elements, to be set at a distance away from the cable sleeve elements.

## Description

### Field of the invention

The present invention relates to a subsea cable crossing device to guide a crossing between subsea cables. The present invention further provides a support assembly for manufacturing a cable crossing device and to a method of manufacturing a cable crossing between subsea cables.

### State of the art

Over the past years, the seabed has become congested increasingly. The introduction of the internet has led to data cables extending over the seabed, for example extending between continents. Furthermore, pipelines are widely used to transport fluids, like oil and gas. With the introduction of offshore wind farms, power cables are also present on the seabed to transport electric energy from wind farms to the shore.

This congestion has an inevitable risk that these cables and pipelines need to cross each other in their paths. Normally, these cables are submerged in the seabed or covered by rocks or the like. This reduces the risk of floating of the cables, under influence of subsea seawater currents at the seabed, or trapping of fishing nets behind the cables. At the crossing, however, it is not possible to have the cables covered. To avoid cables from damaging each other and to be damaged by external influences, it is needed to keep the cables at a distance from each other at the crossing. Such a clearance between cables is also desired to avoid electrical interference between the cables.

A first example of a guiding device is disclosed in GB 2544075 A1, which discloses a bend restrictor for surrounding an upper one of the cables, comprising a plurality of ring-shaped plastic elements. The ring-shaped elements together define an outer perimeter that is spaced radially outward relative to the perimeter of the cable itself. This difference in perimeter provides that the cables themselves are spaced at a distance from each other.

This bend restrictor does have the drawback that the plastic material is a thermal insulator, which gives rise to poor discharge of heat from the cable, for example caused by resistive heating by the electric current in the cable, possibly causing overheating of the cable. Furthermore, the ring-shaped plastic elements may be forced away from each other under influence of the weight of the upper cable, by subsea seawater currents or by scour holes, so that the lower cable may end up pinched in between the spaced ring-shaped plastic elements. This may cause damage to the cables, as a result of the pinching, and the distance between the cables may be reduced. Possibly, cables can even still end up being in contact. These plastic bend restrictors are furthermore relatively expensive and difficult to install on the cable.

A second example of guiding device that are often used a concrete beddings, which are formed by several plate-like concrete elements that together form a flexible plate. These concrete plates are often placed over the lower cable, after which an upper cable can be laid on the concrete plate.

These concrete guiding device do have the drawback that, despite their relatively heavy weight, they still tend to float away under influence of subsea seawater currents. As such, the protective effect of the guiding device may become less effective or even become completely absent.

Other cable guides are for example known from DE 20 2020 104482 U1, which discloses a cable guide for drilling rigs with multiple spaced rings that fully encircle a cable to limit bending of the cable when neighbouring rings contact each other, or from EP 3 641 084 A1, which discloses cable guides for use in the food or pharmaceutical sector, having multiple unitary rings that are spaced at large distances from each other along the cable, each ring having multiple spokes and end plates that are unitary with each other, wherein the end plates form a fully-enclosed outer perimeter.

### Object of the invention

It is therefore an object of the invention to provide a subsea cable crossing device that overcomes one or more of the above drawbacks, or at least to provide and alternative subsea cable crossing device.

### Detailed description

The present invention provides a subsea cable crossing device to guide a crossing between subsea cables, comprising two or more cable sleeve elements, which are configured to be arranged end-to-end and to surround the cable along a longitudinal direction of the cable,
characterized in that the subsea cable crossing device further comprises:
- one or more spacer elements, configured to be arranged at an outer perimeter of at least one of the cable sleeve elements and to project outwardly in a radial direction relative to the longitudinal cable direction, and
- one or more support elements, configured to be associated with the spacer elements at an outer edge of the spacer elements, to be set at a distance away from the cable sleeve elements.

In the present application, the present invention is described in relation to a subsea cable, not forming part of the present subsea cable crossing device, but claimed for illustration of the use of the present device. It is understood that, within the context of the present patent application, the present device can also be used for a crossing between pipelines or any other elongate structure extending over the seabed.

The present subsea cable crossing device comprises a plurality of the cable sleeve elements that are configured to surround the cable. Each of the cable sleeve element may be formed of two or more parts, so that the cable sleeve elements can be mounted to surround the cable.

The cable sleeve elements may comprise a through opening to be slid over the cable. The through opening may extend over the length of the cable sleeve elements, so that the cable will come to extend through the cable sleeve elements along the through openings. As such, the cable sleeve elements may be substantially elongate and may extend substantially parallel to the longitudinal direction of the cable.

It is noted that the longitudinal cable direction may, but not necessarily needs to, be a straight line along the cable. However, the cable may be curved as well, for example at and near the crossing with another cable. With a curved cable, the longitudinal cable direction at any point along its length may be defined as the direction perpendicular to the cross-section of the cable at that point.

In addition to the cable sleeve elements, the cable crossing device comprises one or more spacer elements and one or more support elements. The spacer elements are associated with at least one of the cable sleeve elements. For example, central ones of the cable sleeve elements may be provided with the spacer elements to facilitate the crossing, whereas outer ones of the cable sleeve elements, seen along the longitudinal cable direction, may lack spacer elements, to solely serve the purpose of shielding the cable.

The spacer elements are configured to be associated with a cable sleeve element. The spacer elements can be fastened to the cable sleeve elements, for example with one or more fastening devices, like bolted connections. Alternatively, the spacer elements may form an integral part of the cable sleeve elements, for example being a single casted piece.

The cable sleeve elements may have a perimeter, for example a circumference of a first dimension. The spacer elements extend away from the cable sleeve element in a direction radial to the longitudinal cable direction. As such, an outer perimeter around the outer edges of the spacer elements of a certain cable sleeve element has a second dimension, larger than the first dimension, e.g. circumference, of the cable sleeve element alone. With the spacer elements extending radially relative to the longitudinal cable direction, the spacer elements may be arranged in a plane substantially perpendicular to the longitudinal cable direction, e.g. in a plane perpendicular to the cable sleeve element. Optionally, the first dimension, e.g. a diameter of the cable may be in the range between 50 mm and 100 mm, whereas the second dimension, e.g. a diameter of the cable crossing device around the spacer elements may be in the range between 200 mm and 400 mm, for example being 300 mm.

The cable sleeve elements may not necessarily be aligned parallel to each other, for example in case the cable and the longitudinal cable direction is curved. As a result of the radial spacer elements attached to the cable sleeve elements, the spacer elements of each of the cable sleeve elements may be aligned in different planes, to follow the cable along the longitudinal cable direction. This may be beneficial in practical use, since the cable is not necessarily straight and since the position and curvature of the cable may change over time, for example under influence of subsea seawater currents. The present cable crossing device may therefore be favourable in following the orientation of the cable over time.

Seen along the longitudinal cable direction, the spacer elements may have a width parallel to the longitudinal cable direction that is relatively narrow compared to the length of the cable sleeve elements parallel to the longitudinal cable direction. This narrow width may provide the benefit that, opposed to the existing plastic bend restrictor elements disclosed in GB 2544075 A1, a relatively large area around the cable is unoccupied. This unoccupied area allows for a flow of seawater along the cable sleeve elements and the cable, to improve the cooling of the cable.

The cable crossing device comprises the one or more support elements, which are arranged at the outer edge of the spacer elements, so that they are located at a distance from the cable sleeve elements and the cable. The cable crossing device is configured to lay on the seabed or another, i.e. lower cable with the support elements, so that a clearance may be obtained between the cable and the seabed, as a result of the spacing between the support elements and the cable. This clearance provides the benefit that any interactions between cables and the seabed do not act on the cable, i.e. the upper cable itself, but instead via the support elements and the spacer elements.

The support elements are configured to be associated with a spacer element, for example having multiple support elements attached to a single spacer element. The support elements can be fastened to the spacer elements, for example with one or more fastening devices, like bolted connections. Alternatively, the support elements may form an integral part of the spacer elements, and optionally also with the cable sleeve elements, for example being a single casted piece.

The support elements may be distributed over the outer perimeter of the spacer elements of a cable sleeve element, preferably being distributed evenly, e.g. mutually distributed at the same tangential angle relative to the longitudinal cable direction. As such, the protection offered by the support elements may be present around the entire perimeter of the spacer elements and thus around the entire perimeter of the cable. This may provide the benefit that the orientation of the cable on the seabed, i.e. the rotation about is longitudinal cable direction, has no influence on the protection of the cable, thereby reducing complexities that would otherwise occur during placement of the cable on the seabed.

The cable crossing device according to the present invention may offer the benefit of having more convenient installation than existing cable crossings. Furthermore, it may allow for completely re-use of all components, since the cable crossing device could for example not float away like concrete matrasses.

In an embodiment, the one or more spacer elements comprise at least two spacer elements for one or more of the cable sleeve elements, which are each configured to extend over at least a portion of the perimeter of the cable sleeve elements.

According to this embodiment, the cable sleeve elements may not contain a single spacer element, but multiple instead around their perimeter. This may improve the assembly, since the multiple spacer elements can be assembled around the cable sleeve element, offering an improve in assembly time. In case the cable sleeve element would only contain a single spacer element, the cable sleeve element and the entire cable would need to be inserted through a through aperture or a side opening. Since cable crossing devices are typically assembled offshore, on vessels, it can be imagined that any gain in assembly reduces labour risks, installation time and costs.

The spacer elements may be attachable the cable sleeve element, for example by means of a bolted connection. Alternatively or additionally, in case multiple spacer elements are provided for each cable sleeve element, the multiple spacer elements of each cable sleeve element may be attachable to each other, for example by means of a bolted connection. As such, the spacer elements may only need to be fastened to each other, so that the cable sleeve element can be clamped in between them and that no fasteners need to be inserted in the cable sleeve element.

The spacer elements may comprise an inner ring segment, configured to be mounted against the outer perimeter of the cable sleeve element, and an outer ring segment, which forms the outer edge of the spacer elements. The spacer elements may comprise a plurality of spokes between the inner ring segment and the outer ring segment, which may extend in a radial direction relative to the longitudinal cable direction and which are configured to hold the ring segments at a distance from each other and to transmit forces between the ring segments.

The inner ring segments of all spacer elements of a cable sleeve element may, together, form an inner spacer ring around the cable sleeve element, for example having a circular shape in cross-section. The outer ring segments of these spacer elements may, together, form an outer spacer ring around, i.e. forming the outer edge, for example having a circular shape in cross-section as well.

In a further embodiment, the spacer elements of each of the cable sleeve elements are together configured to extend over the entire perimeter of that cable sleeve element. As such, the combined spacer elements, after assembly around the cable sleeve element, fully encircle the cable sleeve element, thus offering protection around the entire perimeter of the cable sleeve element and the cable.

In a further or alternative embodiment, each of the cable sleeve elements comprises two spacer elements, which are each configured to extend over half the perimeter of the cable sleeve element and which are configured to be attached to the cable sleeve element from diametrically opposite sides of the cable sleeve element.

According to this embodiment, the spacer elements may each have a substantially semi-circular shape, so as to form a complete circle after assembly around the cable sleeve element. The assembly from opposed sides, for example one from the left of the cable and the cable sleeve element and one from the right, e.g. a three o'clock and a nine o'clock position relative to the cross-section of the cable sleeve element, may reduce the efforts needed to assemble the spacer elements.

In an embodiment, each of the spacer elements comprises a plurality of support elements, which are spaced at a distance from each other along the outer edge of the spacer elements in a direction tangential relative to the cable sleeve elements, i.e. relative to the longitudinal cable direction.

The provision of multiple support elements provides that the outer perimeter of the spacer elements of a cable sleeve element can be covered to larger or smaller extent, depending on the local requirements, for example the terrain of the seabed or the size of the cable, in particular of the lower cable on which the cable crossing device is to be laid. Furthermore, the increased number of components may reduce the weight of individual components, thereby reducing the effort for assembly.

The support elements in this embodiment are preferably spread evenly over the perimeter of spacer elements, tangentially around the cable sleeve element and the cable. For example, the cable sleeve element may comprise two spacer elements, that each extend over 180° of the perimeter of the cable sleeve element. According to this example, each of the spacer elements may comprise three support elements, that are each spaced over 60° of the outer edge of the spacer element, so that all six support elements of a cable sleeve element span over the entire 360° perimeter of the cable sleeve element.

In an embodiment, the one or more support elements of each of the cable sleeve elements are substantially elongate and aligned parallel to the cable sleeve elements, i.e. parallel to the longitudinal cable direction.

According to this embodiment, in an installed configuration of the cable crossing device, the support elements may have a dimension parallel to the longitudinal cable direction that is relatively large compared to a width, parallel to a transverse direction relative to the longitudinal cable direction. As such, the cable may be supported over a relatively large portion of its length, offering a stable support, whereas a relatively low percentage of the perimeter of the cable crossing device is covered by support elements, so that sufficient amount of seawater may flow through the cable crossing device, to offer sufficient cooling for the cable.

In an embodiment, the support elements of adjacent cable sleeve elements are staggered relative to each other in a direction tangential relative to the cable sleeve elements, i.e. relative to the longitudinal cable direction.

With the term staggered, it is meant that the spacer elements of a cable sleeve element are rotationally off-set relative to the spacer elements of a neighbouring cable sleeve element, i.e. rotated about the longitudinal cable direction. As such, the support elements of both cable sleeve elements are spaced from each other along the longitudinal cable direction and the mutual rotation between the spacer elements implies that the support elements of a first cable sleeve element project in between a spacing of the support elements of a second cable sleeve element.

For example, in the earlier example of each cable sleeve element having two spacer elements and each spacer element having three support elements, the spacer elements of neighbouring cable sleeve elements may be mutually rotated 30°, 90°, etc. relative to each other, so that the support elements of adjacent cable sleeve elements are spaced over the same angle. With the support elements of the first cable sleeve element being spaced over 60°, the support elements of the second cable sleeve element, rotated over 30°, project right in the middle of the support elements of the first cable sleeve element, when seen in the longitudinal cable direction.

In a further embodiment, the support elements of adjacent cable sleeve elements overlap in a direction parallel to the spacer elements, i.e. parallel to the longitudinal cable direction.

According to this embodiment, the support elements of a first cable sleeve element may actually project in between the support elements of a neighbouring second cable sleeve element. Even though not the entire perimeter of the cable crossing device may be filled with support elements, support elements are present over the entire length of the cable crossing device. This provides the benefit that no gaps are present in between neighbouring elements, e.g. between neighbouring spacer elements or cable sleeve elements, so that the spacer elements cannot be forced away from each other under influence of the weight of the upper cable, preventing that the lower cable can end up in gaps between the spacer elements.

In an embodiment, the one or more spacer elements and the one or more support elements comprise an iron material, for example being made entirely of cast iron or steel.

The iron material has the benefit that it is durable, as it remain relatively inert under water, thus allowing for a longer lifetime. In addition, the iron is reusable and recyclable, further improving the durability. Furthermore, iron has a relatively high thermal conductivity, offering a relatively large discharge of heat from the cables and is relatively strong, thus offering sufficient strength to withstand rock dumping or the like to protect the crossing after installation.

A further benefit is that the iron is relatively heavy, having a density of approximately 7,300 kg/m³, thus requiring a relatively low amount, e.g. volume, of material to still have sufficient weight for the cable crossing device. In general, it may be preferred to manufacture the cable crossing device from a material having a density such, that the overall density of the cable crossing device is larger than the density of the surroundings, i.e. larger than 1.024 kg/m³, the density of seawater. As such, it may be allowed that the cable crossing device may have sufficient weight relative to the seawater in which it is lowered, in particular to prevent the cable crossing device from being buoyant in the seawater. Optionally, the cable crossing device may be provided with floaters to adjust the submerged mass of the cable crossing device in the seawater and to influence the behaviour of the cable crossing device on the seabed under influence of seawater currents.

In an embodiment, the cable sleeve elements are bend restrictor elements that each comprise a first end and a second end, located opposite to the first end, seen along the longitudinal cable direction, wherein the first end of a first bend restrictor element is configured be attached to the second end of a second bend restrictor element to form a pivotable connection between the first bend restrictor element and the second bend restrictor element.

According to this embodiment, the bend restrictor elements are configured to be attached to each other, end-to-end along the longitudinal cable direction. The connected bend restrictor elements are configured to allow bending of the cable, following a mutual tilting between adjacent bend restrictor elements to obtain an angular offset between them. As such, the cable may be protected by the bend restrictor elements in all cases, irrespective of whether the cable is straight or curved.

In a further embodiment, the pivotable connection between the bend restrictor elements is configured to limit an angular offset between adjacent bend restrictor elements to a predetermined threshold angular offset.

According to this embodiment, the bend restrictor elements are configured to mutually tilt up to a certain extent, thereby limiting a maximum curvature of the cable after bending. At the threshold angular offset, the bend restrictor elements are configured to prevent further bending of the cable, thereby guiding the cable, for example at the crossing where it needs to pass a lower cable. As such, any excessing stresses in the cable, resulting from bending with the upper cable laying on the lower cable, are carried by the bend restrictor elements, thereby releasing stresses from the cable and improving lifetime and performance of the cable.

The connection between the bend restrictor elements may for example be formed of a ball-joint connection, so that each first end of the bend restrictor elements may have a quasi-ball shape and that each second end of the bend restrictor elements may have a bowl-shaped socket to receive the ball. The ball-joint connector allows the bend restrictor elements to fully rotate with respect to each other around the longitudinal cable direction, whereas it may only allow tilting around axes perpendicular to the longitudinal cable direction up to a certain extent, i.e. to the predetermined threshold angular offset.

In a further embodiment, the threshold angular offset is less than 15°, preferable less than 10°, for example 6°. It was found by the present inventors that a threshold angular offset may allow for optimal guiding of the cable in accommodating differences in height, for example of the seabed or upon crossing a lower cable.

The present invention also provides a support assembly for manufacturing a cable crossing device on two or more cable sleeve elements, wherein the support assembly comprises one or more spacer elements and one or more support elements of the subsea cable crossing device as disclosed herein. The support assembly according to the present invention may comprise one or more of the features and/or benefits disclosed herein in relation to the cable crossing device, in particular as recited in the appended claims.

The support assembly additionally provides the benefit that an existing bend restrictor for subsea cables may be retrofitted with this support assembly, to become a cable crossing device and to be able to maintain a clearance between subsea cables at a crossing. It is therefore not necessary to replace the existing bend restrictor with a cable crossing device entirely, but instead only required to provide the spacer elements and the support elements of the support assembly.

The present invention finally provides a method of manufacturing a cable crossing between subsea cables by means of the subsea cable crossing device according to any of the preceding claims, comprising the steps of:
- providing a cable with two or more cable sleeve elements, which are arranged end-to-end and which surround the cable along a longitudinal direction of the cable,
- attaching one or more spacer elements to at least one of the cable sleeve elements at an outer perimeter thereof,
- attaching one or more support elements to an outer edge of the spacer elements, and
- lowering the cable, i.e. towards the seabed, so that the cable will come to rest on a second cable with the support elements, i.e. either in direct contact or indirect contact with the second cable.

The manufacturing method according to the present invention may comprise one or more of the features and/or benefits disclosed herein in relation to the cable crossing device, in particular as recited in the appended claims. The method according to the present invention may offer the benefit of offering more convenient installation compared to the installation of existing cable crossings.

The subsea cable crossing device manufactured according to the present method comprises a plurality of the cable sleeve elements that are configured to surround the cable. According to the present method, the cable may either be provided with the cable sleeve elements already attached to it, for example in case a support assembly is used to retrofit on an existing bend restrictor. Alternatively, the cable and cable sleeve elements may be provided separately and may be assembled as a steps of the present method.

In addition to the cable sleeve elements, the cable crossing device comprises one or more spacer elements and one or more support elements. The spacer elements are associated with at least one of the cable sleeve element and the spacer elements are configured to be associated with a cable sleeve element.

According to the present method, the one or more spacer elements may be attached to the cable sleeve elements, for example by means of a bolted connection, comprising nuts and bolts, between the spacer elements and the cable sleeve elements. Alternatively, in case more than a single spacer element is provided, the multiple spacer elements of each cable sleeve element may be attached to each other, for example by means of a bolted connection. To this effect, the spacer elements may comprise openings that face each other after the spacer elements are placed around the cable sleeve element. Bolts may be inserted in the openings, which can be secured with nuts, in order to fasten the spacer elements to each other, so that the cable sleeve element is clamped in between them and that no fasteners need to be inserted in the cable sleeve element.

As a further step, the one or more support elements are attached to the outer edge of the spacer elements, so that they are located at a distance from the cable sleeve elements and the cable. In particular, multiple support elements may be attached to a single spacer element.

The step of attaching the support elements may comprise the fastening of support elements to the spacer elements, for example with one or more fastening devices. This fastening may be carried out by means of a bolted connection, comprising nuts and bolts that are mounted in openings in the support elements and spacer elements that face each other.

As a last step, the cable is lowered towards the seabed, so that the cable crossing device can for example rest on a lower cable already present on the seabed. As such, the lowered upper cable is not in direct contact with the lower cable, but a clearance is present between them, due to the cable crossing device. As a further step, the method may comprise the covering of the cable crossing device, for example by dumping rocks on the cable crossing device, in order to protect the cable crossing device against external influences.

### Brief description of drawings

Further characteristics of the invention will be explained below, with reference to embodiments according to the present invention, which are displayed in the appended drawings, in which:
Figure 1 schematically depicts an embodiment of the cable crossing device according to the present invention,
Figure 2 schematically depicts an embodiment of the cable crossing device in place on the seabed,
Figure 3 depicts a close-up view on the cable crossing device in figure 2,
Figure 4 depicts a perspective view on a segment of the cable crossing device of figures 1-3,
Figure 5 depicts an exploded view of the segment on figure 4, and
Figure 6 depicts a cross-sectional view on the segment of figure 4.

Throughout the figures, the same reference numerals are used to refer to corresponding components or to components that have a corresponding function.

### Detailed description of embodiments

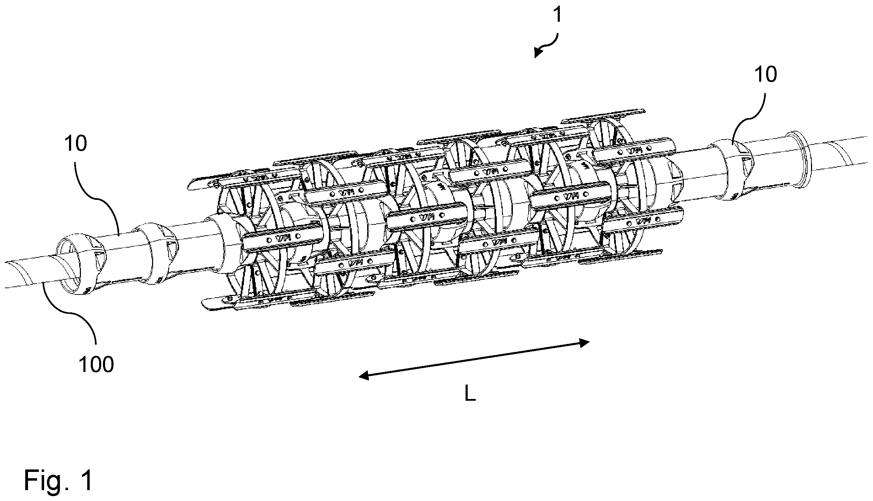

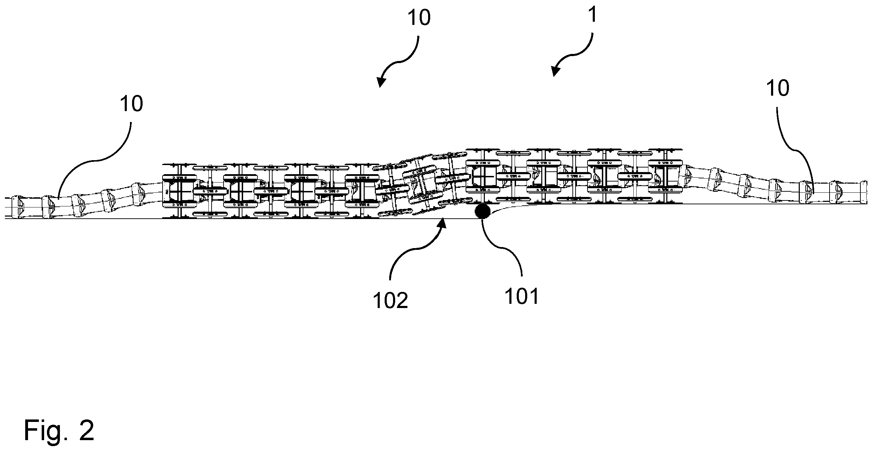

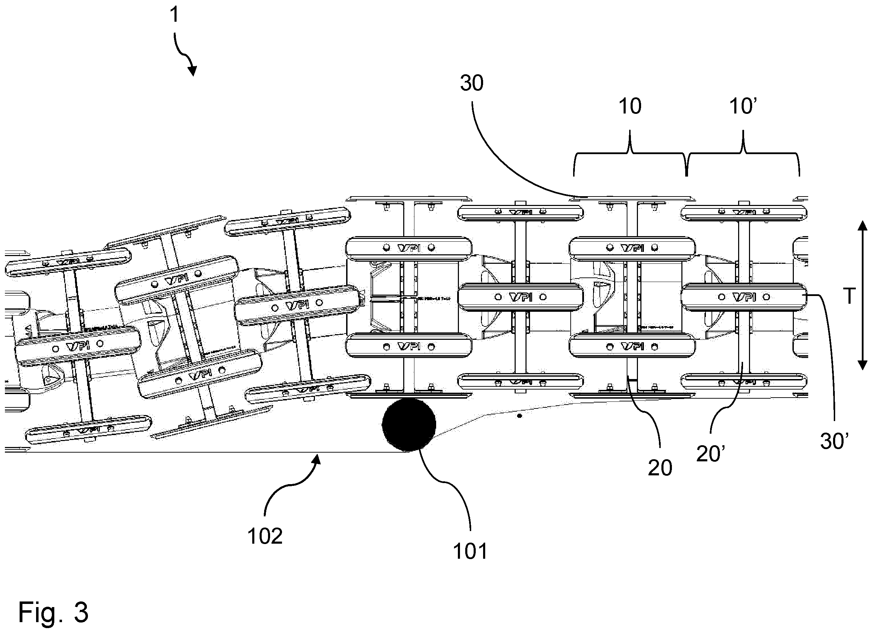

Figure 1 schematically depicts an embodiment of the cable crossing device according to the present invention, to which is referred with reference numeral 1. The device 1 is installed around a subsea cable 100, as is shown in figure 1. The device 1 is used to guide a crossing between the cable 100 and a second, transverse subsea cable 101 on the seabed 102, as is shown in figures 2 and 3.

The device 1 comprises a plurality of cable sleeve elements 10 which are arranged end-to-end and which surround the cable 100 along a longitudinal direction L of the cable 100. It is noted that the longitudinal cable direction L may, but not necessarily needs to, be a straight line along the cable 100. However, the cable 100 can be curved as well, for example at and near the crossing with another cable 101, as is shown in figures 2 and 3. With a curved cable 100, the longitudinal cable direction at any point along its length may be defined as the direction perpendicular to the cross-section of the cable 100at that point.

The cable sleeve elements 10 comprise a through opening 11 to be slid over the cable 100. The through opening 11 extends over the length of the cable sleeve elements 10, so that the cable 100 will come to extend through the cable sleeve elements 10 along the through openings 11. As such, the cable sleeve elements 10 are substantially elongate and may substantially parallel to the longitudinal direction L of the cable 100.

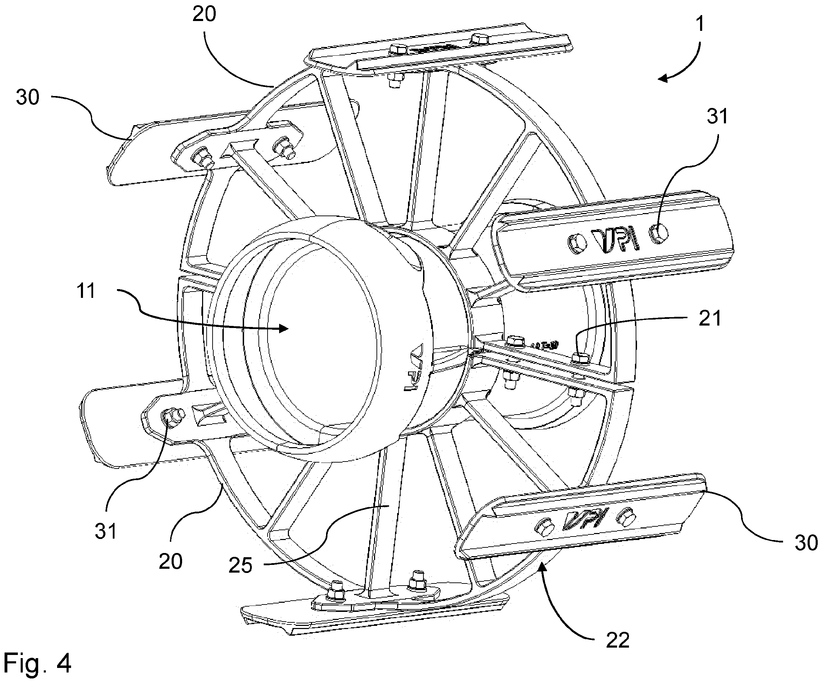

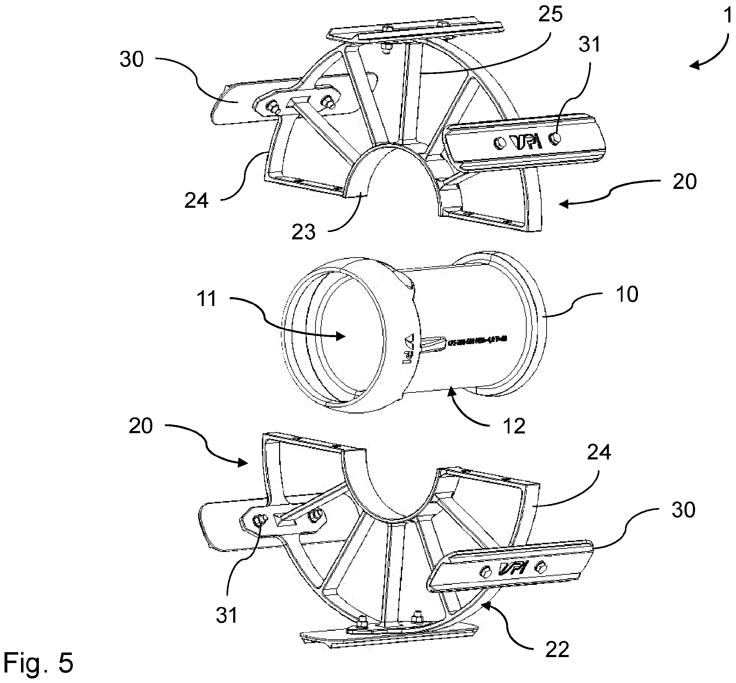

The cable sleeve elements 10 are bend restrictor elements that each comprise a first end, shown on the left in figures 4 and 5, and a second end, located opposite to the first end, seen along the longitudinal cable direction L. The first end of a first bend restrictor element 10 is configured be attached to the second end of a second bend restrictor element 10' to form a pivotable connection between the first bend restrictor 10 element and the second bend restrictor element 10'. The connected bend restrictor elements 10 are configured to allow bending of the cable 100, following a mutual tilting between adjacent bend restrictor elements 10 to obtain an angular offset between them, as is shown in figures 2 and 3.

The pivotable connection between the bend restrictor elements 10 is configured to limit an angular offset between adjacent bend restrictor elements 10 to a predetermined threshold angular offset, which is about 6°. The bend restrictor elements 10 are configured to mutually tilt up to a certain extent, thereby limiting a maximum curvature of the cable 100 after bending. At the threshold angular offset, the bend restrictor elements 10 are configured to prevent further bending of the cable 100, thereby guiding the cable 100, for example at the crossing where it needs to pass a lower cable 101.

The cable crossing device 1 further comprises a plurality of spacer elements 20 and a plurality of support elements 30. The spacer elements 20 and the support elements 30 according to the present embodiment are made entirely of cast iron, to improve durability, inertness and recyclability of the device 1.

The spacer elements 20 are associated with at least one of the cable sleeve elements 10. It is in particular shown in figures 1 and 2 that central ones of the cable sleeve elements 10 are provided with the spacer elements 20 to facilitate the crossing, whereas outer ones of the cable sleeve elements 10, seen along the longitudinal cable direction L on the far left and far right in figures 1 and 2, lack spacer elements 20, to solely serve the purpose of shielding the cable 10.

The spacer elements 20 are associated with a cable sleeve element 10, but are, in the present embodiment, not connected to the cable sleeve element 10 directly. Instead, the multiple spacer elements 20 of each cable sleeve element 10 may be attachable to each other, by means of a bolted connection 21. It is shown in figures 4 and 5 that the spacer elements 20 are only fastened to each other, so that the cable sleeve element 10 can be clamped in between them and that no fasteners need to be inserted in the cable sleeve element 10.

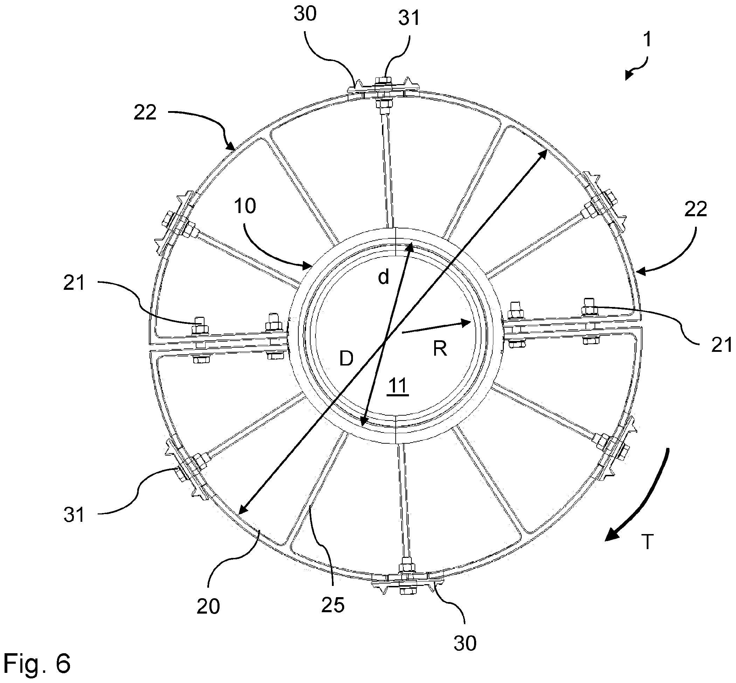

The cable sleeve elements 10 have a perimeter, e.g. represented in the cross-sectional view of figure 6 by means of diameter d. The spacer elements 20 extend away from the cable sleeve element 20 in a radial direction R, relative to the longitudinal cable direction L. As such, an outer perimeter around the outer edges 22 of the spacer elements 20 of a certain cable sleeve element 10 has a second dimension, represented in the cross-sectional view of figure 6 by means of diameter D, larger than the first dimension of the cable sleeve element 10 alone.

The spacer elements may comprise an inner ring segment 23, configured to be mounted against the outer perimeter 12 of the cable sleeve element 10, and an outer ring segment 24, which forms the outer edge 22 of the spacer elements 20. The spacer elements 20 each comprise a plurality of spokes 25 between the inner ring segment 23 and the outer ring segment 24, which extend in the radial direction R relative to the longitudinal cable direction L. The spokes 25 are configured to hold the ring segments 23, 24 at a distance from each other and to transmit forces between the ring segments 23, 24.

The inner ring segments 23 of all spacer elements 20 of a cable sleeve element 10, together, form an inner spacer ring around the cable sleeve element 10, having a circular shape in cross-section. The outer ring segments 24 of these spacer elements 20, together, form an outer spacer ring around, i.e. forming the outer edge 22, having a circular shape in cross-section as well.

It is best shown in figures 2 and 3 that the cable sleeve elements 10 not necessarily need to be aligned parallel to each other, for example where the cable 100 is curved at the crossing. As a result of the radial spacer elements 20 attached to the cable sleeve elements 10, the spacer elements 20 of each of the cable sleeve elements 20 can be aligned in different planes, to follow the cable 100 along the longitudinal cable direction L.

Seen along the longitudinal cable direction L, the spacer elements 20 have a width parallel to the longitudinal cable direction L that is relatively narrow compared to the length of the cable sleeve elements 10 parallel to the longitudinal cable direction L.

The present device 1 comprises two spacer elements 20 for one or more of the cable sleeve elements 10, which each extend over the entire perimeter of the cable sleeve elements 10, in order to improve the assembly of the device 1. In particular, the spacer elements 20 have a substantially semi-circular shape and each extend over half the perimeter of the cable sleeve element 10 and are configured to be attached to the cable sleeve element 10 from diametrically opposite sides of the cable sleeve element 10. The combined spacer elements 20, after assembly around the cable sleeve element 10, fully encircle the cable sleeve element 10, as is best visible in figure 6.

The cable crossing device comprises the one or more support elements 30, which are arranged at the outer edge 22 of the spacer elements, so that they are located at a distance from the cable sleeve elements 10 and the cable 100. The cable crossing device 1 is configured to lay on the seabed 102 and on the lower cable 101 with the support elements 30, so that a clearance may be obtained between the cable 100 and the seabed 102, as a result of the spacing between the support elements and the cable.

The support elements 30 are associated with a spacer element 20, in particular with multiple support elements 30 attached to a single spacer element 20. According to the present embodiment, the support elements 30 are fastened to the spacer elements 20 by means of a bolted connection 31.

Each of the spacer elements 20 comprises three support elements 30, which are spaced at a distance from each other along the outer edge 22 of the spacer elements 20 in a direction tangential T relative to the cable sleeve elements 10, i.e. relative to the longitudinal cable direction L.

The support elements 30 in this embodiment are preferably spread evenly over the perimeter of spacer elements 20, tangentially around the cable sleeve element 10 and the cable 100. Especially, the cable sleeve elements 10 each comprise two spacer elements 20, that each extend over 180° of the perimeter 12 of the cable sleeve element 10. Furthermore, the three support elements 30 of each spacer element 20 are each spaced over 60° of the outer edge 22 of the spacer element 20 in the tangential direction (T). As a result, all six support elements 30 of a cable sleeve element 10 will span over the entire 360° perimeter of the cable sleeve element 10.

The support elements 30 of each of the cable sleeve elements 10 are substantially elongate and are aligned parallel to the cable sleeve elements 10 and thus parallel to the longitudinal cable direction (L). As such, in the installed configuration of the cable crossing device 1 shown in figures 1-3, the support elements 30 have a dimension parallel to the longitudinal cable direction L that is relatively large compared to their width.

It is shown best in figure 3 that the support elements 20 of adjacent cable sleeve elements 10, 10' are staggered relative to each other in a direction tangential T relative to the cable sleeve elements 10, i.e. relative to the longitudinal cable direction L. With the term staggered, it is meant that the spacer elements 20 of a cable sleeve element 10 are rotationally off-set relative to the spacer elements 20' of a neighbouring cable sleeve element 10, i.e. rotated about the longitudinal cable direction L. As such, the support elements 20, 20' of both cable sleeve elements 10, 10' are spaced from each other along the longitudinal cable direction L and the mutual rotation between the spacer elements 20, 20' implies that the support elements 30 of a first cable sleeve element 10 project in between a spacing of the support elements 30' of a second cable sleeve element 10.

In particular in the embodiment of the cable crossing device 1 shown in figure 3, in which each cable sleeve element 10 has two spacer elements 20 and in which each spacer element 20 has three support elements 30, the spacer elements 20, 20' of neighbouring cable sleeve elements 10, 10' are mutually rotated 30°, 90°, etc. relative to each other, so that the support elements 30, 30'of adjacent cable sleeve elements 10, 10' are spaced over the same angle. With the support elements 30 of the first cable sleeve element 10 being spaced over 60°, the support elements 30' of the second cable sleeve element 10, rotated over 30°, project right in the middle of the support elements 30 of the first cable sleeve element 10, as is visible in the side view in figure 3.

It is further visible in figure 3 that the support elements 30, 30' of adjacent cable sleeve elements 10, 10' overlap in a direction parallel to the spacer elements 30, 30', i.e. parallel to the longitudinal cable direction L. The support elements 30 of the first cable sleeve element 10 thereby actually project in between the support elements 30' of the second, neighbouring cable sleeve element 10'. This provides the benefit that no gaps are present in between neighbouring spacer elements 20, 20' or cable sleeve elements 10, 10', and that the cable 100 is provided with support elements 30 over substantially the entire length of the cable crossing device 1.

## Claims

1. Subsea cable crossing device (1) to guide a crossing between subsea cables (100, 101), comprising two or more cable sleeve elements (10), which are configured to be arranged end-to-end and to surround the cable (100) along a longitudinal direction (L) of the cable (100),
**characterized in that,**
the subsea cable crossing device (1) further comprises:
- one or more spacer elements (20), configured to be arranged at an outer perimeter of at least one of the cable sleeve elements (10) and to project outwardly in a radial direction (R) relative to the longitudinal cable direction (L), and
- one or more support elements (30), configured to be associated with the spacer elements (20) at an outer edge (22) of the spacer elements (20), to be set at a distance away from the cable sleeve elements (10).

2. Cable crossing device (1) according to claim 1, wherein the one or more spacer elements (20) comprise at least two spacer elements (20) for one or more of the cable sleeve elements (10), which are each configured to extend over at least a portion of the perimeter of the cable sleeve elements (10).

3. Cable crossing device (1) according to claim 2, wherein the spacer elements (20) of each of the cable sleeve elements (10) are together configured to extend over the entire perimeter of that cable sleeve element (10).

4. Cable crossing device (1) according to claim 2 or 3, wherein each of the cable sleeve elements (10) comprises two spacer elements (20), which are each configured to extend over half the perimeter of the cable sleeve element (10) and which are configured to be attached to the cable sleeve element (10) from diametrically opposite sides of the cable sleeve element (10).

5. Cable crossing device (1) according to any of the preceding claims, wherein each of the spacer elements (20) comprises a plurality of support elements (30), which are spaced at a distance from each other along the outer edge (22) of the spacer elements (20) in a direction tangential (T) relative to the cable sleeve elements (10), i.e. relative to the longitudinal cable direction (L).

6. Cable crossing device (1) according to any of the preceding claims, wherein the one or more support elements (30) of each of the cable sleeve elements (10) are substantially elongate and aligned parallel to the cable sleeve elements (10), i.e. parallel to the longitudinal cable direction (L).

7. Cable crossing device (1) according to claim 6, wherein, in an installed configuration of the cable crossing device (10), the support elements (30) have a dimension parallel to the longitudinal cable direction (L) that is relatively large compared to a width, parallel to a transverse direction relative to the longitudinal cable direction (L).

8. Cable crossing device (1) according to any of the preceding claims, wherein the support elements (30) of adjacent cable sleeve elements (10) are staggered relative to each other in a direction tangential (T) relative to the cable sleeve elements (10), i.e. relative to the longitudinal cable direction (L).

9. Cable crossing device (1) according to claim 8, wherein the spacer elements (20) of a first cable sleeve element (10) are rotationally off-set relative to the spacer elements (20') of a neighbouring second cable sleeve element (10'), i.e. rotated about the longitudinal cable direction (L),
wherein the support elements (30, 20') of both cable sleeve elements (10, 10') are spaced from each other along the longitudinal cable direction (L), and
wherein the support elements (30) of the first cable sleeve element (10) project in between a spacing of the support elements (30') of the neighbouring second cable sleeve element (10').

10. Cable crossing device (1) according to claim 8 or 9, wherein the support elements (30, 30') of adjacent cable sleeve elements (10, 10') overlap in a direction parallel to the spacer elements (20, 20'), i.e. parallel to the longitudinal cable direction (L), so that the support elements (30) of a first cable sleeve element (10) projects in between the support elements (30') of a neighbouring second cable sleeve element (10').

11. Cable crossing device (1) according to any of the preceding claims, wherein the cable sleeve elements (10) are bend restrictor elements that each comprise a first end and a second end, located opposite to the first end, seen along the longitudinal cable direction (L),
wherein the first end of a first bend restrictor element (10) is configured be attached to the second end of a second bend restrictor element (10) to form a pivotable connection between the first bend restrictor element (10) and the second bend restrictor element (10).

12. Cable crossing device (1) according to claim 11, wherein the pivotable connection between the bend restrictor elements (10) is configured to limit an angular offset between adjacent bend restrictor elements (10) to a predetermined threshold angular offset.

13. Cable crossing device (1) according to claim 12, wherein the threshold angular offset is less than 15°, preferable less than 10°, for example 6°.

14. Support assembly for manufacturing a cable crossing device (1) on two or more cable sleeve elements (10), the support assembly comprising one or more spacer elements (20) and one or more support elements (30) of the subsea cable crossing device (1) according to any of the preceding claims.

15. Method of manufacturing a cable crossing between subsea cables (100, 101) by means of the subsea cable crossing device (1) according to any of the claims 1 - 13, comprising the steps of:
- providing a cable (100) with two or more cable sleeve elements (10), which are arranged end-to-end and which surround the cable (100) along a longitudinal direction (L) of the cable (100),
- attaching one or more spacer elements (20) to at least one of the cable sleeve elements (10) at an outer perimeter thereof,
- attaching one or more support elements (30) to an outer edge (22) of the spacer elements (20), and
- lowering the cable (100), i.e. towards the seabed (102), so that the cable (100) will come to rest on a second cable (101) with the support elements (30), i.e. either in direct contact or indirect contact with the second cable (101).
